(19) Europäisches Patentamt
European Patent Office
Office européen des brevets

(11) **EP 2 935 025 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(21) Anmeldenummer: **13765645.0**

(22) Anmeldetag: **12.09.2013**

(51) Int Cl.:
***B65C 3/26*** *(2006.01)*

(86) Internationale Anmeldenummer:
**PCT/EP2013/002734**

(87) Internationale Veröffentlichungsnummer:
**WO 2014/094925 (26.06.2014 Gazette 2014/26)**

(54) **VERFAHREN SOWIE BEHÄLTERBEHANDLUNGSMASCHINE ZUM AUSSTATTEN VON BEHÄLTERN MIT AUSSTATTUNGSMERKMALEN**

METHOD AND DEVICE FOR APPLYING INDICIA TO CONTAINERS

PROCÉDÉ ET DISPOSITIF POUR APPLIQUER DES MARQUAGES AUX RÉCIPIENTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012 DE 102012025149**

(43) Veröffentlichungstag der Anmeldung:
**28.10.2015 Patentblatt 2015/44**

(73) Patentinhaber: **KHS GmbH**
**44143 Dortmund (DE)**

(72) Erfinder: **DECKERT, Lutz**
**45721 Haltern am See (DE)**

(56) Entgegenhaltungen:
**WO-A1-97/13645     US-A- 3 261 734**
**US-A- 4 315 795**

**Beschreibung**

Die Erfindung bezieht sich auf ein Verfahren gemäß Oberbegriff Patentanspruch 1 sowie auf eine Behälterbehandlungsmaschine gemäß Oberbegriff Patentanspruch 8.

Es ist üblich und bekannt, Flaschen oder dergleichen Behälter beim Aufbringen von Ausstattungsmerkmalen, beispielsweise beim Etikettieren oder Bedrucken, an der jeweiligen Behandlungsposition einer Behälterbehandlungsmaschine zwischen einem Behälterträger und einem an der Behälteröffnung anliegenden Zentrierelement oder Zentrierkonus einzuspannen, um die betreffenden Behälter beim Aufbringen des jeweiligen Ausstattungsmerkmals zu halten und um ihre vertikale Behälterachse gesteuert drehen zu können.

Speziell bei Verarbeitung von leeren, dünnwandigen Behältern, beispielsweise von dünnwandigen, z.B. durch Blasformen hergestellten Kunststoff- oder PET-Behältern oder -Flaschen ist es auch bekannt, diese Behälter mit geringer Eigenstabilität durch Vorspannen, d.h. durch Beaufschlagen ihres Behälterinnenraumes mit dem Druck eines gas- und/oder dampfförmigen Druck- oder Stützmediums, beispielsweise mit dem Druck steriler Luft oder eines sterilen Inertgases zu stabilisieren, sodass sie bei der für das Aufbringen der Ausstattungsmerkmale notwendigen Behältereinspannkraft nicht deformiert oder zerstört werden. Das Vorspannen der Behälter erfolgt dabei durch Öffnen eines Steuerventils über die Zentrierelemente, welche mit einem Zentrierkonus jeweils dicht gegen die Behältermündungen anliegen. Die Anpresskraft wird üblicherweise kurvengesteuert durch jeweils ein mit einer Steuerkurve zusammenwirkendes Betätigungselement oder Gestänge erzeugt, welches über eine Druckfeder auf das Zentrierelement einwirkt. Dies hat zur Folge, dass die zwischen dem Zentrierelement und dem Behälter wirkende Anpresskraft oder Behältereinspannkraft unmittelbar nach dem Absenken des Zentrierelementes auf den Behälter stark ansteigt, ohne dass sich in dem Behälter bereits ein für seine Stabilisierung ausreichender Behälterinnendruck ausgebildet hat, was zu Beschädigungen an den Behältern führen kann.

Bei bekannten Etikettiermaschinen (DE 41 25 579) erfolgt außerdem das Öffnen des Steuerventils für das Druckmedium durch eine Steuerscheiben in Abhängigkeit von der Drehstellung des Rotors, sodass die Abgabe des Stützmediums auch dann freigegeben wird, wenn sich kein Behälter an der betreffenden Behandlungsposition befindet.

Weiterhin ist es bei Etikettiermaschinen auch bekannt (DE 60208736 T2), die Zentrierelemente so auszubilden, dass das Steuerventil zur Freigabe des Druckmediums durch den jeweiligen Behälter und durch Anheben des Zentrierkonus des Zentrierelementes erfolgt, wobei die hierfür benötigte Kraft allerdings durch den Druck des Stützmediums bestimmt ist. Insbesondere vor dem Hintergrund immer leichter und daher immer dünnwandiger und instabiler werdenden Behälter ist auch dies von erheblichem Nachteil. Eine Beaufschlagung der Behälter mit einem diese stabilisierenden erhöhten Innendruck bedeutet nämlich, dass zum Öffnen des Steuerventils, also dann, wenn noch keine ausreichende Stabilisierung des Behälters vorliegt, eine hohe zwischen dem Behälter und dem Zentrierkonus wirkende Kraft erforderlich ist.

Ebenfalls bekannt wurde eine Etikettiervorrichtung nach der US 3,261,734. Im Wesentlichen befasst sich diese Schrift mit einer Zentriertulpe, die dazu vorgesehen ist, einen offenen, ungefüllten Behälter für den nachfolgenden Etikettierprozess mit einem Druckmedium vorzuspannen. Dazu sieht diese Schrift mehr im Detail vor, dass das Druckmedium durch die Zentriertulpe in den Behälter gelangt. Für das Anheben der Zentriertulpe und auch für das Schließen des Weges für das Druckmedium ist innerhalb der Zentriertulpe ein Pneumatikzylinder vorgesehen. Das Absenken der Zentriertulpe und auch das öffnen des Weges für das Druckmedium erfolgt nach dem drucklos schalten des Pneumatikzylinders durch die Kraft einer Druckfeder. Nachteilig an dieser Vorrichtung ist, dass der Weg für das Druckmedium auch dann geöffnet wird, wenn sich kein Behälter an der Behandlungsposition befindet.

Aus der WO 97/13645 ist ein Verfahren gemäß dem Oberbegriff des Anspruchs 1 bekannt.

Aufgabe der Erfindung ist es, ein Verfahren aufzuzeigen, welches die vorgenannten Nachteile des Standes der Technik vermeidet und ein Aufbringen von Ausstattungsmerkmalen auf leere dünnwandige Behälter mit verbesserter Betriebssicherheit und schonenden Behandlung der Behälter ermöglicht.

Zur Lösung dieser Aufgabe ist ein Verfahren entsprechend dem Patentanspruch 1 ausgebildet. Eine Behälterbehandlungsmaschine ist Gegenstand des Patentanspruchs 8.

Ausstattungsmerkmale im Sinne der Erfindung sind Elemente, die auf die Behälter als Informations- und/oder Werbeelement oder -hinweis und/oder zur Erzeugung eines Garantie- und/oder Originalitätsnachweises und/oder zur Erzeugung eines angestrebten optischen Behälter-Erscheinungsbildes aufgebracht werden. Ausstattungselemente in diesem Sinne sind insbesondere Etiketten, Banderolen, Folierungen, aber auch auf die Behälter aufgebrachte Druckbilder usw.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

| | |
|---|---|
| Fig. 1 und 2 | in vereinfachter Darstellung und in Draufsicht sowie in Seitenansicht eine Behälterbehandlungsmaschine in Form einer Etikettiermaschine zum Etikettieren von dünnwandigen Behältern in Form von aus Kunststoff bzw. PET gefertigten Flaschen; |
| Fig. 3 | in einem Diagramm den zeitlichen Verlauf der Behältereinspannkraft bei der Etikettiermaschine der Figuren 1 und 2; |
| Fig. 4 | in vergrößerter Darstellung ein Zentrierelement der Etikettiermaschine der Figuren 1 und 2 zusammen mit einer Teildarstellung einer Flasche im Bereich ihrer Flaschenmündung; |
| Fig. 5 | in einer Darstellung wie Figur 2 eine weitere Ausführungsform der Erfindung; |
| Fig. 4 | den Verlauf der Behältereinspannkraft in Abhängigkeit von der Drehstellung eines Rotors der Etikettiermaschine der Figur 5. |

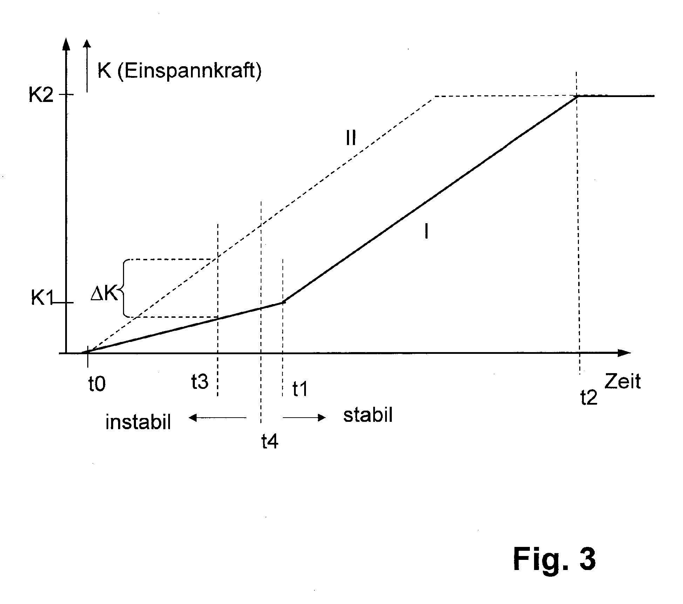

Die in den Figuren allgemein mit 1 bezeichnete Etikettiermaschine dient zum Etikettieren von leeren dünnwandigen Behältern 2 in Form von aus Kunststoff bzw. aus PET durch Blasformen hergestellten Flaschen. Die Etikettiermaschine 1 umfasst in bekannter Weise den um eine vertikale Maschinenachse MA kontinuierlich umlaufenden angetriebenen Rotor 3, der an seinem Umfang eine Vielzahl von Behandlungspositionen 4 bildet. Diesen werden die zu etikettierenden leeren Behälter 2 über einen äußeren Transporteur 5 und einen Behältereinlauf 6 zugeführt. Mit den Behandlungspositionen 4 werden die Behälter 2 zum Aufbringen von Etiketten 7 an wenigstens einem mit dem Rotor 3 nicht mitbewegten Etikettieraggregat 8 vorbeibewegt werden. Die Behälter 2 sind an der jeweiligen Behandlungsposition 4 aufrecht stehend, d.h. mit ihrer Behälterachse parallel zur Maschinenachse MA angeordnet zwischen einem unteren Drehteller 9, auf dem sie mit ihrem Boden aufstehen, und einem oberen Zentrierelement 10 eingespannt, welches mit einem Zentrier- und Verschließkonus 11 (Figur 3) in die jeweilige Behältermündung 2.1 diese abdichtend hineinreicht. Die etikettierten leeren Behälter 2 werden den Behandlungspositionen 4 an einem Behälterauslauf 6.1 entnommen und über einen äußeren Transporteur 5.1 einer weiteren Verwendung, beispielsweise einer Füllmaschine zum Füllen der Behälter 2 zugeführt.

Das Zentrierelement 10 ist über ein Gestänge 12 mit einer Betätigungseinrichtung 13 verbunden, mit der nach der Übergabe eines Behälters 2 an eine Behandlungsposition 4 das betreffende Zentrierelement 10 zum Einspannen dieses Behälters aus einer angehobenen Position abgesenkt und zur Freigabe des Behälters 2 am Behälterauslauf 6.1 angehoben wird. Das Etikettieren der Behälter 2 erfolgt beispielsweise durch Anrollen der Etiketten 7, wofür die zwischen dem Drehteller 9 und dem Zentrierelement 10 eingespannten Behälter um ihre Behälterachse durch einen nicht dargestellten Antrieb des Drehtellers 9 gedreht bzw. rotiert werden.

Um eine ausreichende Stabilität der leeren, dünnwandigen Behälter 2 beim Etikettieren zu erreichen, werden sie jeweils innen mit einem vorzugsweise sterilen gas- und/oder dampfförmigen Druckmedium, beispielsweise mit steriler Druckluft beaufschlagt, und zwar über den in Dichtlage mit der Behältermündung 2.1 befindlichen Zentrierkonus 11. Die Beaufschlagung des Behälterinnenraumes mit dem Druckmedium erfolgt dabei gesteuert durch ein in dem jeweiligen Zentrierelement 10 vorgesehenes Steuerventil 14, welches durch das Absenken des Zentrierelementes 10 bzw. des Zentrierkonus 11 auf den betreffenden Behälter 2 gesteuert wird, und zwar derart, dass es für ein Einleiten des Druckmediums in den Innenraum des jeweiligen Behälters 2 dann öffnet, wenn der Zentrierkonus 11 in ausreichender Dichtlage gegen die betreffende Behälteröffnung 2.1 angepresst anliegt. Weiterhin ist die Kraft, mit der der Zentrierkonus 11 gegen die Behältermündung 2.1 anliegt, d.h. die Behältereinspannkraft K u.a. mit dem Betätigungselement 13 derart gesteuert, dass entsprechend der Kurve I der Figur 3 in einer ersten Phase der Einspannung auf den Behälter 2 eine zwar zeitlich ansteigende, aber verminderte Behältereinspannkraft K ausgeübt wird, die nicht nur ausreicht, um das Steuerventil 14 zu öffnen und die Dichtlage zwischen dem Zentrierkörper 11 und dem Behälter 2 herzustellen, sondern es auch ermöglicht, dass der Behälter am Ende, bevorzugt bereits vor dem Ende der ersten Phase, d.h. zum Zeitpunkt t4 durch einen ausreichend hohen, vom Stützmedium erzeugten Behälterinnendruck p1 ausreichend stabil ist. Diese erste Phase erstreckt sich zwischen den Zeitpunkten t0 und t1 der Figur 3. Das Steuerventil 14 öffnet zum Zeitpunkt t3.

Erst in einer zweiten Phase der Einspannung, d.h. dann, wenn der durch das Stützmedium erzeugte Behälterinnendruck p1 ausreichend groß ist und dadurch der betreffende Behälter die notwendige Stabilität aufweist, wird die Behältereinspannkraft K durch das Betätigungselement 13 auf die endgültige Behältereinspannkraft K2 erhöht, und zwar in einem bezogen auf die Zeit gegenüber der ersten Phase steileren Anstieg. Die die endgültige Behältereinspannkraft K2 wird zumindest bis zum Abschluss des jeweiligen Etikettiervorgangs aufrecht erhalten.

Dargestellt ist in der Figur 3 mit der Kurve II auch die Behältereinspannkraft K bei herkömmlichen, kurvengesteuerten und über Druckfedern auf die Behälter einwirkenden Zentrierelementen. Aus dem Verlauf der Kurve II ist ersichtlich, dass bei diesen herkömmlichen Zentrierelementen die auf den jeweiligen Behälter 2 einwirkende Behältereinspannkraft auf jeden Fall zu einem Zeitpunkt, an dem der jeweilige Behälter noch keine ausreichende Stabilität aufweist, gegenüber dem Verlauf der Kurve I um den Betrag ΔK deutlich erhöht ist, und zwar Verbunden mit der Gefahr einer Beschädigung der Behälter 2 durch die erhöhte Behältereinspannkraft. Durch die beschriebene Kraft gesteuerte Betätigung des jeweiligen Zentrierelementes 10 mit dem Betätigungselement 13 wird bei der Erfindung eine Beschädigung der Behälter 2 wirksam vermieden.

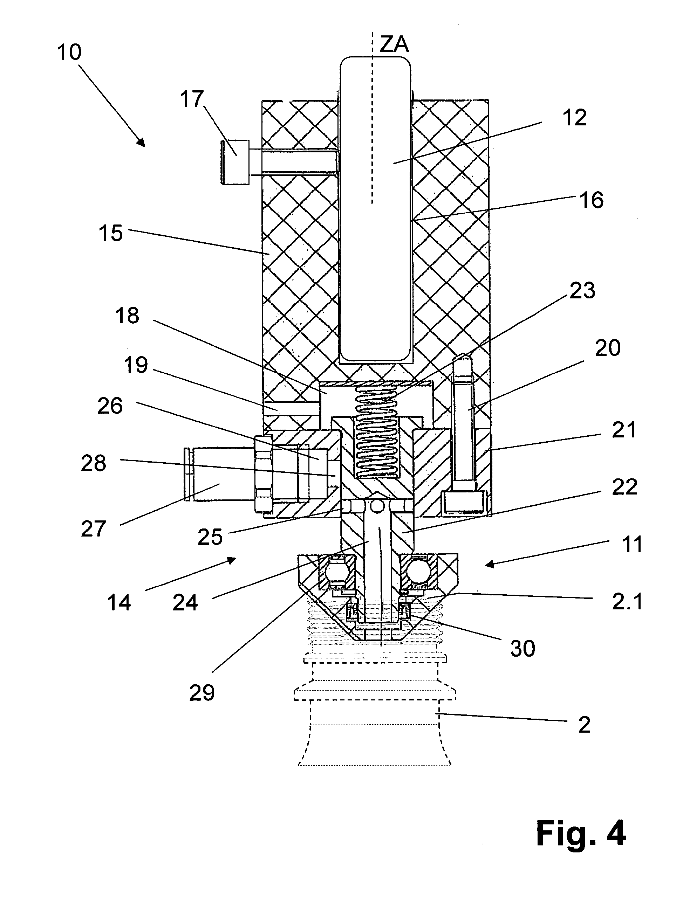

Die Figur 4 zeigt das Zentrierelement 10 mehr im Detail. Es besteht im Wesentlichen aus einem Zentrierelementgehäuse 15 mit Öffnung 16 zur Aufnahme des unteren Endes des Gestänges 12 und zum lösbaren Befestigen des Zentrierelementes 10 an diesem Gestänge mittels einer Halte- oder Klemmschraube 17. An der Unterseite ist das Gehäuse 15 mit einem Kolbenraum 18 ausgebildet, der über einen Lüftungskanal 19 mit der Umgebung verbunden und an der Unterseite des Gehäuses 15 durch einen mit Schrauben 20 am Gehäuse 15 gehaltenen Deckel 21 verschlossen ist. Im Deckel 21 ist ein Zentrier- oder Ventilkolben 22, der Teil des Steuerventils 14 ist, bezogen auf eine vertikale Zentrierelementachse ZA axial verschiebbar, und zwar gegen die Wirkung einer Druckfeder 23 zwischen der in der Figur 4 unteren Position, die dem geschlossenen Zustand des Steuerventils 14 entspricht, und einer obere Position, die dem geöffnetem Zustand des Steuerventils 14 entspricht, wobei dieses aber tatsächlich bereits öffnet, bevor der Ventilkolben 22 seine obere Position erreicht. Die Druckfeder 23 wirkt zwischen dem Ventilkolben 22 und dem Boden des Kolbenraumes 18. Im Ventilkolben 22 ist ein achsgleich mit der Zentrierelementachse ZA angeordnete Kanal 24 vorgesehen, der an dem unteren, über die Unterseite des Deckels 21 wegstehenden Ende des Ventilkolbens 22 offen ist und an seinem oberen Ende mit einem Ringkanal 25 in Verbindung steht, der die Zentrierelementachse ZA konzentrisch umschließt und an der Mantelfläche des Ventilkolbens 22 offen ist. Im Deckel 21 ist weiterhin ein Kanal 26 ausgebildet, der über eine Verbindungsleitung, von der lediglich das Anschlussstück 27 dargestellt ist, mit einer das Druck- oder Stützmedium bereitstellenden Quelle verbunden ist und ein Steuerfenster 28 aufweist, welches in der in der Figur 4 dargestellten geschlossenen Stellung des Steuerventils 14 durch die Mantelfläche des Ventilkolbens 22 verschlossen ist und in der dem geöffneten Steuerventil 14 entsprechenden Stellung des Ventilkolbens 22, aber auch bereits vor Erreichen dieser Stellung deckungsgleich mit der Umfangsnut 25 angeordnet ist. Hierfür ist auch die Druckfeder 23 ist so ausgelegt, dass der Ventilkolben 22 bereits dann aus seiner das Steuerventil 14 verschließenden Stellung, in die dieses Steuerventil öffnende Stellung bewegt wird, wenn der Zentrierkonus 11 gegen die Mündung 2.1 des Behälters 2 zur Anlage kommt und den Behälter 2 ausreichend abdichtet. Dieser Zustand ist auf jeden Fall lange vor der Beendigung der ersten Phase erreicht, d.h. zum Zeitpunkt t3. Erst am Ende der ersten Phase liegt der Ventilkolben 22 gegen den Boden des Kolbenraumes 18 an, sodass die weitere Erhöhung der Behältereinspannkraft K von dem Gehäuse 15 unmittelbar auf den Zentrierkonus 11 übertragen wird.

Der Zentrierkonus 11 ist mit einem Kugellager 29 um die Zentrierelementachse ZA frei drehbar am Ventilkolben 22 gelagert, sodass beim Etikettieren ein Drehen des jeweiligen Behälters 2 um die Zentrierelementachse ZA möglich ist, ohne dass dabei der Ventilkolben 22 mitbewegt wird. Der Spalt zwischen dem Ventilkolben 22 und dem Zentrierkonus 11 ist durch eine Dichtung 30 abgedichtet.

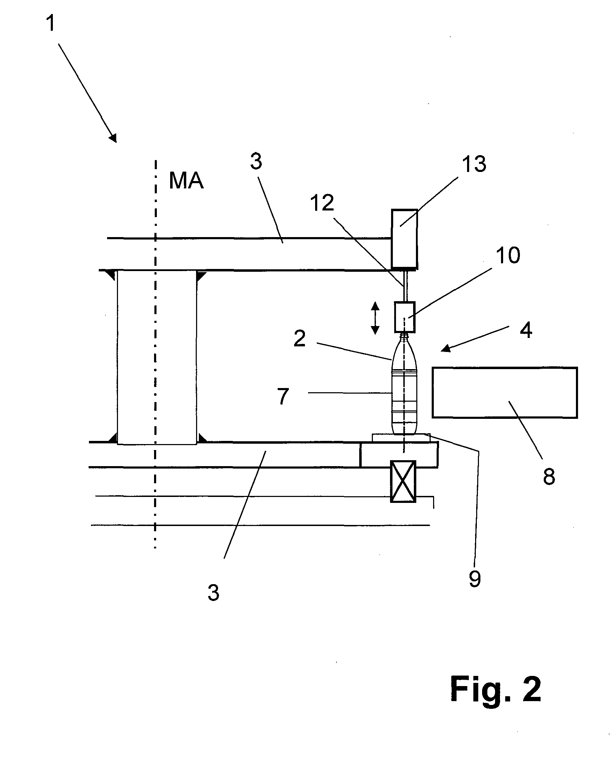

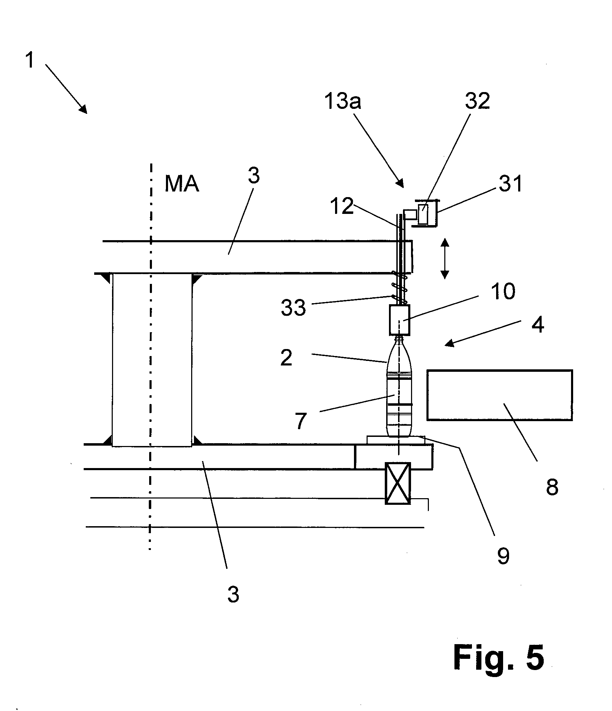

Die Figur 5 zeigt in einer Darstellung ähnlich der Figur 2 eine weitere Ausführungsform der Etikettiermaschine 1, die sich von der vorbeschriebenen Ausführungsform lediglich dadurch unterscheidet, dass die Absenk- und Anpressbewegung des Zentrierelementes 10 nicht kraftgesteuert, sondern weggesteuert erfolgt, und zwar unter Verwendung einer mit dem Rotor 3 nicht umlaufenden Hub- und Steuerkurve 31, mit der eine an dem Gestänge 12 vorgesehene Kurvenrolle 32 zusammenwirkt. Die Behältereinspannkraft K des Zentrierelementes 10 wird bei dieser Ausführungsform u.a. durch eine Druckfeder 33 erzeugt, die zwischen dem die Kurvenrolle 32 ausweisenden Teil des Gestänges und dem Zentrierelement 10 wirkt und zusammen mit der Hub- und Steuerkurve 31 und der Kurvenrolle 31 das Betätigungselement 13a bildet.

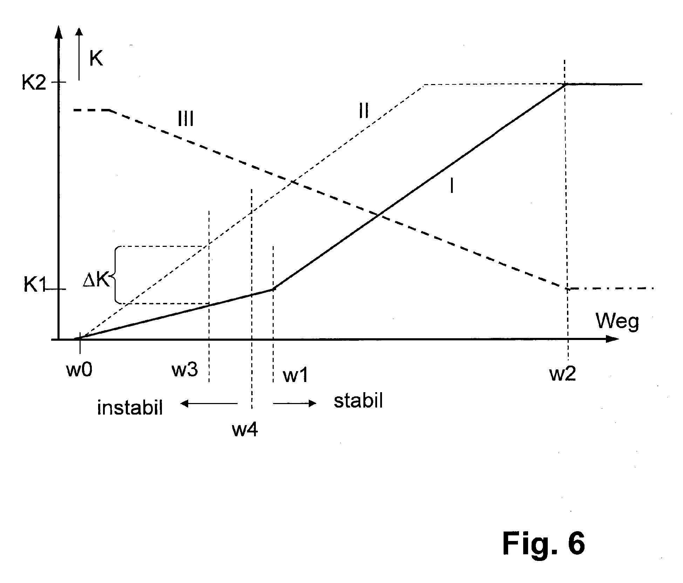

Auch bei dieser in der Figur 5 dargestellten Ausführungsform erfolgt das Einspannen des jeweiligen Behälters 2 an der Behandlungsposition in zwei Phasen, und zwar entsprechend der Kurve I der Figur 6, die den Verlauf der Behältereinspannkraft K in Abhängigkeit vom Drehwinkel w des Rotors 3 wiedergibt in einer ersten Phase zwischen w0 und w1 mit reduziertem Anstieg der Behältereinspannkraft K bis auf die Behältereinspannkraft K1 und in einer zweiten Phase zwischen w1 und w2 mit vergrößertem Anstieg der Behältereinspannkraft K bis auf die endgültige Behältereinspannkraft K2. Die Behältereinspannkraft K wird wiederum derart gesteuert, dass in der ersten Phase die Behältereinspannkraft K nicht nur ausreicht, um das Steuerventil 14 bei w3 zu öffnen und die Dichtlage zwischen dem Zentrierkörper 11 und dem Behälter 2 herzustellen, sondern es auch ermöglicht, dass der Behälter 2 am Ende, bevorzugt bereits vor dem Ende der ersten Phase bei w4 durch einen ausreichend hohen, vom Stützmedium erzeugten Behälterinnendruck p1 ausreichend stabil ist. Die endgültige Behältereinspannkraft K2 wird wiederum zumindest bis zum Abschluss des jeweiligen Etikettiervorgangs aufrecht erhalten. Dargestellt ist in der Figur 6 mit der Kurve II wiederum die Behältereinspannkraft K bei herkömmlichen, kurvengesteuerten und über Druckfedern auf die Behälter einwirkenden Zentrierelementen. Aus dem Verlauf der Kurve II ist ersichtlich, dass bei diesen herkömmlichen Zentrierelementen die auf den jeweiligen Behälter 2 einwirkende Behältereinspannkraft K auf jeden Fall zu einem Zeitpunkt, an dem der jeweilige Behälter noch keine ausreichende Stabilität aufweist, gegenüber dem Verlauf der Kurve I um den Betrag ΔK deutlich erhöht ist, und zwar Verbunden mit der Gefahr einer Beschädigung der Behälter durch die erhöhte Behältereinspannkraft. Durch die beschriebene Kraft gesteuerte Betätigung des jeweiligen Zentrierelementes 10 mit dem Betätigungselement 13 wird bei der Erfindung eine Beschädigung der Behälter 2 wirksam vermieden.

Die Steuerkurve 31 weist beispielsweise den in der Figur 6 mit III bezeichneten Verlauf auf. Der reduzierte Anstieg der Behältereinspannkraft K ist durch die Druckfeder 23 bestimmt, die so ausgelegt ist, dass sie sich beim Einspannen vor der Druckfeder 33 oder stärker als die Druckfeder 33 verformt und der Ventilkolben erst am Ende der ersten Phase (bei w2) gegen den Boden der Kolbenöffnung 18 anliegt. Die Druckfeder 23 ist weiterhin so ausgelegt, dass der Ventilkolben 22 bereits dann aus seiner das Steuerventil 14 verschließenden Stellung in die dieses Ventil öffnende Stellung bewegt wird, sobald der Zentrierkonus 11 die Behältermündung 2.1 ausreichend abdichtet. Dieser Zustand ist auf jeden Fall lange vor der Beendigung der ersten Phase erreicht, d.h. w3. Erst am Ende der ersten Phase liegt der Ventilkolben 22 gegen den Boden des Kolbenraumes 18 an, sodass die weitere Erhöhung der Behältereinspannkraft K durch die Druckfeder 33 erzeugt wird. Bei dieser Ausführungsform liegen die beiden Druckfedern 23 und 33 hinsichtlich ihrer Wirkung in Serie.

Allen beschriebenen Ausführungen ist gemeinsam, dass am Ende der ersten Phase, d.h. bei t1 bzw. w1 die Behältereinspannkraft K1 deutlich unter der endgültigen Behältereinspannkraft K2 am Ende der zweiten Phase, d.h. bei t2 bzw. w2 ist, z.B. maximal 50%, beispielsweise etwa 25% - 30% der Behältereinspannkraft K2 beträgt, wobei der jeweilige Behälter 2 aber zumindest bei t1 bzw. w1 durch das über das geöffnete Steuerventil 14 in den Behälterinnenraum bereits eingeleitete Druckmedium bzw. durch den von diesem Druckmedium erzeugten Innendruck p1 eine ausreichende Stabilität aufweist. Dieser Innendruck p1 ist dabei höchstens gleich oder geringfügig kleiner ist als der Quotient aus der Behältereinspannkraft K1 und dem Flächenmaß F des Öffnungsquerschnittes der Behälter2 im Bereich ihrer Behältermündung 2.1, d.h.

$$p1 \leq K1/F.$$

In der zweiten Phase, d.h. zwischen t1 - t2 bzw. w1 - w2 erfolgt dann beispielsweise durch weiteres Zufließen des Druckmediums in den Behälterinnenraum eine weitere Erhöhung des Behälterinnendruck p auf den Wert p2 oder aber der Behälterinnendruck bleibt konstant oder im Wesentlichen konstant auf dem Wert p1.

Die Erfindung wurde voranstehend an Ausführungsbeispielen beschrieben. Es versteht sich, dass zahlreiche Änderungen oder Abwandlungen möglich sind.

## Bezugszeichenliste

| 1 | Etikettiermaschine |
|---|---|
| 2 | Behälter |
| 2.1 | Behältermündung |
| 3 | Rotor |
| 4 | Behandlungsposition |
| 5, 5.1 | Transporteur |
| 6 | Behältereinlauf |
| 6.1 | Behälterauslauf |
| 7 | Etikett |
| 8 | Etikettieraggregat |
| 9 | Drehteller |
| 10 | Zentrierelement |
| 11 | Zentrierkonus |
| 12 | Gestänge |
| 13, 13a | Betätigungselement |
| 14 | Steuerventil |
| 15 | Zentrierelementgehäuse |
| 16 | Entlüftungsöffnung |
| 17 | Halte- oder Klemmschraube |
| 18 | Kolbenraum |
| 19 | Entlüftungsöffnung |
| 20 | Schraube |
| 21 | Deckel |
| 23 | Druckfeder |
| 24 | Kanal |
| 25 | Ringnut |
| 26 | Kanal |
| 27 | Anschlussstück |
| 28 | Steuerfenster |
| 29 | Kugellager |
| 30 | Dichtung |
| 31 | Steuerkurve |
| 32 | Kurvenrolle |
| 33 | Druckfeder |

| MA | Maschinenachse |
|---|---|
| ZA | Zentrierelementachse |

## Patentansprüche

1. Verfahren zum Aufbringen von Ausstattungsmerkmalen auf leere, dünnwandige Flaschen oder dergleichen Behälter (2) unter Verwendung einer Behälterbehandlungsmaschine (1) mit einer Vielzahl von Behandlungspositionen (4) an einem umlaufenden Transportelement, beispielsweise an einem um eine vertikale Maschinenachse MA umlaufenden Rotor (3), wobei die Behälter (2) an den Behandlungspositionen (4) zwischen einem Behälterträger (6) und einem Zentrierkonus (11) eines Zentrierelementes (10) mit einer Behältereinspannkraft (K) eingespannt mit dem Transportelement (3) an wenigstens einem Aggregat (8) zum Aufbringen zumindest eines Ausstattungsmerkmals (7) vorbeibewegt werden und zu ihrer Stabilisierung gesteuert über ein Steuerventil (14) mit dem Druck (p) eines gas- und/oder dampfförmigen Druck- oder Stützmediums vorgespannt werden, und zwar über den eine Behälteröffnung (2.1) des jeweiligen Behälters (2) verschließenden Zentrierkonus (11), **dadurch gekennzeichnet,** **dass** das Einspannen jedes Behälters (2) in einer ersten Phase mit einer reduzierten ersten Behältereinspannkraft (K1) und/oder mit einem reduzierten ersten Anstieg der Behältereinspannkraft (K) erfolgt, **dass** vor Beendigung der ersten Phase das im Zentrierelement (10) vorgesehene Steuerventil (14) durch die zwischen dem Behälter und dem Zentrierkonus (11) wirkende Behältereinspannkraft (K) zur Vorspannung des Behälters (2) mit einem gas- und/oder dampfförmigen Druckmedium geöffnet wird, und **dass** in einer auf die erste Phase folgenden zweiten Phase das weitere Einspannen der Behälter (2) mit einer erhöhten zweiten Behältereinspannkraft (K2) und/oder mit einem erhöhten zweiten Anstieg der Behältereinspannkraft (K) erfolgt.

2. Verfahren nach Anspruch 1, **dadurch gekennzeichnet, dass** die Behältereinspannkraft (K) in der ersten Phase und/oder in der zweiten Phase stetig oder stufenartig zunimmt.

3. Verfahren nach Anspruch 1 oder 2, **dadurch gekennzeichnet, dass** die Behältereinspannkraft (K) durch ein Betätigungselement (13, 13a) kraft- oder weggesteuert erfolgt.

4. Verfahren nach Anspruch 3, **dadurch gekennzeichnet, dass** die Behältereinspannkraft (K) weggesteuert durch ein mit einer Steuerkurve (31) zusammenwirkendes Betätigungselement (12, 32) erzeugt wird, welches bevorzugt über wenigstens ein Federelement (23, 33) auf den Behälterträger (6) oder Zentrierkonus (11) einwirkt.

5. Verfahren nach Anspruch 4, **dadurch gekennzeichnet, dass** die Behältereinspannkraft (K) in der ersten Phase zumindest zum Teil durch wenigstens ein das Steuerventil (14) in seinen Schließzustand vorspannendes Federelement (23) erzeugt wird.

6. Verfahren nach einem der vorhergehenden Ansprüche, **dadurch gekennzeichnet, dass** das Öffnen des Steuerventils (14) durch Relativbewegung des an einem Ventilelement (22) des Steuerventils (14) vorgesehenen oder mit diesem Ventilelement (22) zusammenwirkenden Zentrierkonus (11) relativ zu einem Gehäuse (15) des Zentrierelementes (10) erfolgt.

7. Verfahren nach einem der vorhergehenden Ansprüche, **dadurch gekennzeichnet, dass** als Ausstattungsmerkmale Etiketten (7) auf die Behälter (2) aufgebracht werden und/oder die Behälter (2) zur Erzeugung der Ausstattungsmerkmale bedruckt werden.

8. Behälter-Behandlungsmaschine, insbesondere Etikettiermaschine zum Durchführen des Verfahrens nach einem der vorhergehenden Ansprüche, mit mehreren an einem umlaufenden Transportelement (3), beispielsweise an einem um eine vertikale Maschinenachse (MA) umlaufenden Rotor vorgesehenen Behandlungspositionen (4), die jeweils einen Behälterträger (6) sowie ein Zentrierelement (10) mit Zentrierkonus (11) aufweisen und mit denen die jeweils zwischen dem Behälterträger (6) und dem Zentrierkonus (11) mit einer Behältereinspannkraft (K) eingespannten leeren Behälter (2) auf einem Transportweg des umlaufenden Transportelementes an Aggregaten (8) zum Aufbringen des jeweiligen Ausstattungsmerkmals vorbeibewegt werden, mit einem Betätigungselement (13, 13a) an jeder Behandlungsposition (4) zur Erzeugung der Behältereinspannkraft (K) und mit einem im Zentrierkonus (11) ausgebildeten mit einem Steuerventil (14) gesteuerten Kanal (24), über den die in Dichtlage gegen den jeweiligen Zentrierkonus (11) anliegenden Behälter (2) zu ihrer Stabilisierung mit einem gas- und/oder dampfförmigen Druckmedium zur Erzeugung eines Behälterinnendrucks (p) beaufschlagt werden, **dadurch gekennzeichnet,** **dass** das Steuerventil (14) im jeweiligen Zentrierelement (10) vorgesehen und so ausgebildet ist, dass es durch die zwischen dem Zentrierkonus (11) und dem Behälter (2) wirkende Behältereinspannkraft zum Vorspannen des jeweiligen Behälters (2) geöffnet wird.

9. Behälterbehandlungsmaschine nach Anspruch 8, **dadurch gekennzeichnet, dass** der Zentrierkonus (11) an einem axial in einem Gehäuse (15) des Zentrierelementes (10) vorgesehenen Ventilelement oder Ventilkolben (22) gehalten ist, und dass das Ventilelement oder der Ventilkolben (22) durch wenigstens ein Federelement (23), beispielsweise durch wenigstens eine Druckfeder in eine das Steuerventil (14) schließende Position vorgespannt ist, aus der das Ventilelement (22) gegen die Wirkung des Federelementes (23) in eine das Steuerventil (14) öffnende Position bewegbar ist.

10. Behälterbehandlungsmaschine nach Anspruch 9, **dadurch gekennzeichnet, dass** das Federelement (23) für die Erzeugung der Anpresskraft (K) in der ersten Phase oder zumindest in einem Teilabschnitt dieser ersten Phase der Einspannung ausgebildet ist.

## Claims

1. Method for applying indicia to empty, thin-walled bottles or containers (2) of that kind, by using a container treatment machine (1) having a plurality of treatment positions (4) on a circumferential transport element, such as a rotor (3) circulating about a vertical machine axis MA, wherein the containers (2) on the treatment positions (4), clamped between a container support (6) and a centering cone (11) of a centering element (10) with a container clamping force (K), can be moved past at least one aggregate device (8) for applying one or more indicia (7), and, for the stabilisation of the container, the container can be pretensioned, controlled by means of a control valve (14), with the pressure (p) of a gaseous and/or vaporous pressure or support medium, and specifically by means of the centering cone (11) closing a container opening (2.1) of the respective container (2), **characterised in that**
the clamping of each container (2) takes place in a first phase with a reduced first container clamping force (K1) and/or with a reduced first rise in the container clamping force (K),
that, before the ending of the first phase, the control valve (14) provided in the centering element (10) is opened by the container clamping force (K), taking effect between the container and the centering cone (11) for pretensioning the container (2) with a gaseous and/or vaporous pressure medium, and
that in a second phase following the first phase, the further clamping of the containers (2) is effected with an increased second container clamping force (K2) and/or with an increased second rise in the container clamping force (K).

2. Method according to claim 1, **characterised in that** the container clamping force (K) in the first phase and/or in the second phase rises or increases incrementally.

3. Method according to claim 1 or 2, **characterised in that** the container clamping force (K) is applied by an actuation element (13, 13a) as force-controlled or path-controlled.

4. Method according to claim 3, **characterised in that** the container clamping force (K) is produced in a path-controlled manner by an actuation element (12, 32) interacting with a control curve (31), which preferably takes effect by means of at least one spring element (23, 33) on the container support (6) or centering cone (11).

5. Method according to claim 4, **characterised in that** the container clamping force (K) in the first phase is produced at least in part by at least one spring element (23) pretensioning the control valve (14) in its closed state.

6. Method according to any one of the preceding claims, **characterised in that** the opening of the control valve (14) is effected by relative movement of the centering cone (11), provided at a valve element (22) of the control valve (14) or interacting with this valve element (22), relative to a housing (15) of the centering element (10).

7. Method according to any one of the preceding claims, **characterised in that**, the indicia are applied to the containers (2) as labels (7) and/or the containers (2) for generating the indicia are printed.

8. Container treatment machine, in particular a labelling machine, for carrying out the method according to any one of the preceding claims, with a plurality of treatment positions (4) provided on a circumferential transport element (3), for example on a rotor circulating about a vertical machine axis (MA), which in each case comprise a container support (6) as well as a centering element (10) with centering cone (11), and with which the empty containers (2), in each case clamped between the container support (6) and the centering cone (11) with a container clamping force (K), are moved on a transport path of the circumferential transport element past aggregate devices (8) for applying the respective indicia, with an actuation element (13, 13a) at each treatment position (4) for producing the container clamping force (K) and with a channel (24), formed in the centering cone (11) and controlled with a control valve (14), by means of which the containers (2), located in sealing contact against the respective centering cone (11), are subjected for their stabilisation to a gaseous and/or vaporous pressure medium so as to create a container inner pressure (p), **characterised in that** the control valve (14) is provided in the respective centering element (10) and is configured in such a way that it is opened by the container clamping force taking effect between the centering cone (11) and the container (2), for pretensioning the respective container.

9. Container treatment machine according to claim 8, **characterised in that** the centering cone (11) is held at a valve element or valve piston (22) provided axially in a housing of the centering element (10), and that the valve element or the valve piston (22) is pretensioned by at least one spring element (23), for example, by at least one pressure spring, in a position closing the control valve (14), from which the valve element (22) can be moved against the effect of the spring element (23) into a position opening the control valve (14).

10. Container treatment machine according to claim 9, **characterised in that** the spring element (23) is configured for producing the pressure force (K) in the first phase or at least in a first phase of this first phase of the clamping process.

**Revendications**

1. Procédé pour appliquer des caractéristiques d'accessoirisation sur des bouteilles vides, à parois minces ou sur des contenants (2) similaires en utilisant une machine de traitement de contenants (1) équipée d'une pluralité de positions de traitement (4) au niveau d'un élément de transport en circulation, par exemple au niveau d'un rotor (3) en circulation autour d'un axe de machine MA vertical, dans lequel les contenants (2) enserrés au niveau des positions de traitement (4) entre un support de contenant (6) et un cône de centrage (11) d'un élément de centrage (10) à l'aide d'une force d'enserrage de contenant (K) sont déplacés avec l'élément de transport (3) le long au moins d'un groupe (8) pour appliquer au moins une caractéristique d'accessoirisation (7) et sont précontraints aux fins de leur stabilisation de manière commandée par l'intermédiaire d'une soupape de commande (14) avec la pression (p) d'un milieu de pression ou de soutien sous forme gazeuse et/ou sous forme de vapeur, à savoir par l'intermédiaire du cône de centrage (11) fermant une ouverture de contenant (2.1) du contenant (2) respectif, **caractérisé en ce que** l'enserrage de chaque contenant (2) est effectué lors d'une première phase avec une première force d'enserrage de contenant (K1) réduite et/ou avec une première augmentation réduite de la force d'enserrage de contenant (K),
qu'avant la fin de la première phase, la soupape de commande (14) prévue dans l'élément de centrage (10) est ouverte par la force d'enserrage de contenant (K) agissant entre le contenant et le cône de centrage (11), afin de précontraindre le contenant (2) avec un milieu de pression sous forme de gaz et/ou de vapeur, et
que lors d'une deuxième phase suivant la première phase, la poursuite de l'enserrage des contenants (2) est effectuée avec une deuxième force d'enserrage de contenant (K2) plus importante et/ou avec une deuxième augmentation plus importante de la force d'enserrage de contenant (K).

2. Procédé selon la revendication 1, **caractérisé en ce que** la force d'enserrage de contenant (K) augmente, lors de la première phase et/ou lors de la deuxième phase, de manière permanente ou de manière graduelle.

3. Procédé selon la revendication 1 ou 2, **caractérisé en ce que** la force d'enserrage de contenant (K) est effectuée par un élément d'actionnement (13, 13a) par une commande forcée ou par une commande proportionnelle à la course.

4. Procédé selon la revendication 3, **caractérisé en ce que** la force d'enserrage de contenant (K) est produite par une commande proportionnelle à la course par un élément d'actionnement (12, 32) coopérant avec une came de commande (31), lequel agit, de manière préférée par l'intermédiaire au moins d'un élément de ressort (23, 33), sur le support de contenant (6) ou sur le cône de centrage (11).

5. Procédé selon la revendication 4, **caractérisé en ce que** la force d'enserrage (K) est produite, lors de la première phase, au moins en partie par au moins un élément formant ressort (23) précontraignant la soupape de commande (14) dans son état de fermeture.

6. Procédé selon l'une quelconque des revendications précédentes, **caractérisé en ce que** l'ouverture de la soupape de commande (14) est effectuée par le déplacement relatif du cône de centrage (11) prévu au niveau d'un élément de soupape (22) de la soupape de commande (14) ou coopérant avec ledit élément de soupape (22) par rapport à un boîtier (15) de l'élément de centrage (10).

7. Procédé selon l'une quelconque des revendications précédentes, **caractérisé en ce que** des étiquettes (7) sont appliquées sur les contenants (2) en tant que caractéristiques d'accessoirisation, et/ou **en ce que** les contenants (2) sont imprimés afin de produire des caractéristiques d'accessoirisation.

8. Machine de traitement de contenants, en particulier machine à étiqueter pour exécuter le procédé selon l'une quelconque des revendications précédentes, comprenant plusieurs positions de traitement (4) prévues au niveau d'un élément de transport (3) en circulation, par exemple au niveau d'un rotor circulant autour d'un axe de machine (MA) vertical, lesquelles présentent respectivement un support de contenant (6) ainsi qu'un élément de centrage (10) pourvu d'un cône de centrage (11) et avec lesquelles les contenants (2) vides respectivement enserrés entre le support de contenant (6) et le cône de centrage (11) avec une force d'enserrage de contenant (K) sont déplacés, sur un trajet de transport de l'élément de transport en circulation, le long de groupes (8) pour appliquer la caractéristique d'accessoirisation respective, avec un élément d'actionnement (13, 13a) au niveau de chaque position de traitement (4) afin de produire la force d'enserrage de contenant (K) et avec un canal (24) réalisé dans le cône de centrage (11), commandé avec une soupape de commande (14), par l'intermédiaire duquel les contenants (2) reposant en position étanche contre le cône de centrage (11) respectif sont soumis, aux fins de leur stabilisation, à l'action d'un milieu de pression sous forme gazeuse et/ou sous forme de vapeur afin de produire une pression intérieure de contenant (p), **caractérisée en ce que** la soupape de commande (14) est prévue dans l'élément de centrage (10) respectif et est réalisée de telle sorte qu'elle est ouverte par la force d'enserrage de contenant agissant entre le cône de centrage (11) et le contenant (2) afin de précontraindre le contenant (2) respectif.

9. Machine de traitement de contenant selon la revendication 8, **caractérisée en ce que** le cône de centrage (11) est maintenu au niveau d'un élément de soupape ou d'un piston de soupape (22) prévu de manière axiale dans un boîtier (15) de l'élément de centrage (10), et **en ce que** l'élément de soupape ou le piston de soupape (22) est précontraint par au moins un élément de ressort (23), par exemple par au moins un ressort de pression, dans une position fermant la soupape de commande (14), hors de laquelle l'élément de soupape (22) peut être déplacé, à l'encontre de l'action de l'élément de ressort (23), dans une position ouvrant la soupape de commande (14).

10. Machine de traitement de contenants selon la revendication 9, **caractérisée en ce que** l'élément de ressort (23) est réalisé en vue de la production de la force de compression (K) lors de la première phase ou au moins dans une partie de ladite première phase de l'enserrage.

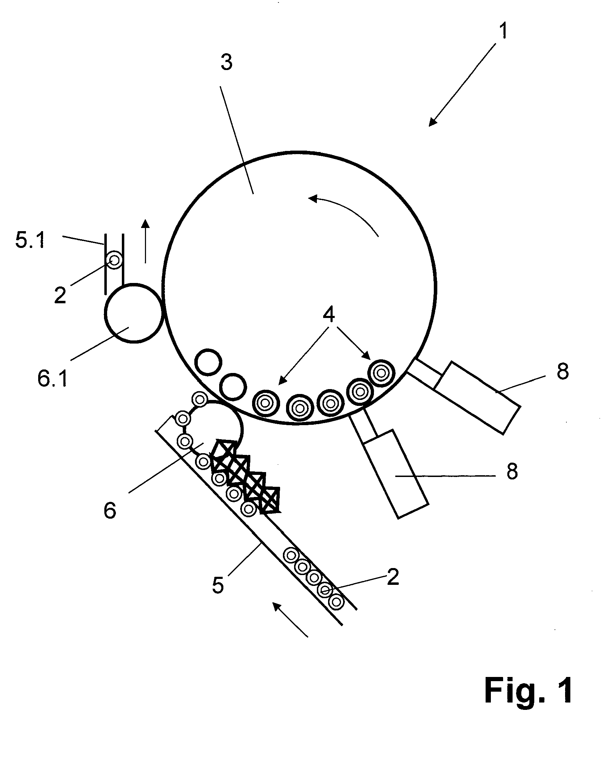

**Fig. 1**

1

MA    3    12    13    10    4

2

7    8

3    9

**Fig. 2**

**Fig. 3**

**Fig. 4**

1

13a    32

MA    3        12    31

33

10

4

2

7

8

3        9

3

**Fig. 5**

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4125579
- DE 60208736 T2
- US 3261734 A
- WO 9713645 A